# EUROPEAN PATENT APPLICATION

(11) **EP 0 834 371 A1**
(43) Date of publication of application: **08.04.1998**
(21) Application number: 97117023.8
(22) Date of filing: 01.10.1997
(51) Int. Cl.: B23B 31/20

(54) **Collet with jaw carrier**

(30) Priority: 03.10.1996 IT MI962041
(71) Applicant: CLERICI, Gianfranco, I-20161 Milano (IT)
(72) Inventor: CLERICI, Gianfranco, I-20161 Milano (IT)
(74) Representative: Filippi, Remo

(57) **Abstract**

Collet (15) for the chucks on automatic lathes with a collet carrier (40) comprising three rectangular longitudinal clefts open at the front into each of which a jaw (21-23) becomes fitted, bounded by common geometric surfaces, an internal cylindrical surface (24) corresponding to that of the bar (14) to be processed and an external truncated cone-shaped surface (32) corresponding to the internal surface (13) of the mouth of the chuck, so that on applying an axial force to said collet directed towards the inside of the chuck, matching of the truncated cone-shaped surfaces produces transversal and radial components with translation of the jaws and movement of the arms of the collet carrier towards the bar so clamping said bar obtaining maximum adherence and maximum axial precision.

## Description

The invention concerns collets for automatic lathes.

In automatic lathes the bar to be processed must be subjected to a clamp and release cycle by a collet supported by a chuck crossed through by the bar.

The jaws of the collet form a cylindrical body with a cylindrical internal surface.

By means of longitudinal-radial cuts, the walls of said cylindrical body are divided into strips corresponding to the various jaws.

The collet is closed by a centripetal movement of said jaws under action by some means of thrust.

As the centripetal motion is generally produced by curvature of the strips of the cylindrical supporting body, only a limited area of the jaws can make contact with the bar.

Further pressure from the jaws against the bar can gradually increase the surface of contact between bar and jaws if the strips that form the jaws are sufficiently elastic, but as the jaws must be hard they cannot also possess the necessary elasticity.

The jaws could be constructed in blocks, separate from the supporting cylindrical body and connected to it by elastic strips, but this would give rise to structural and operational problems.

In any case it is practically impossible to achieve complete adherence between the entire inner surface of the jaws and the bar.

Collets have been invented with free jaws and in theory, when pressed by conical surfaces, these would permit perfect adherence with the bar to be processed as they would be forced to translate radially.

But if the jaws are free problems arise over guiding them and also axial freedom in relation to the supporting body might cause difficulty in securing a proper grip between jaws and bar in the axial direction of the chuck.

The present invention solves these problems at the same time providing structural simplicity and an accurate grip by the collet in the axial direction that continues for the whole length of the jaws as will be explained below.

Subject of the invention is a collet for chucks on automatic lathes used for processing bars and the like, consisting of the collet itself and its carrier.

The collet comprises three equal radial jaws of substantially constant width and substantially parallel sides, bounded by an internal cylindrical surface substantially corresponding to that of the bar to be processed, and of an exterrnal truncated cone-shaped surface corresponding to the internal surface of the mouth of the chuck.

The collet carrier is formed of a substantially cylindrical body to fit inside the chuck, the front of said body being bounded by an external truncated cone-shaped surface substantially equal to the external surface of the jaws.

Three substantially rectangular clefts are made at an equal angular distance in the body of said collet carrier, said clefts being open at the front and of a constant width substantially corresponding to that of the jaws, that create three substantially equal longitudinal arms, said jaws being circumferentially lodged inside said clefts.

All this produces a collet bounded internally by a geometrically constant cylindrical surface and, externally rearward by a cylindrical surface coaxial with the first, and forward by a truncated cone-shaped surface, the whole forming the jaws and arms of the collect carrier, substantially of equal shape and size, substantially corresponding to the internal truncated cone-shaped surface of the mouth of the chuck.

On applying to said collet an axial force or clamping reaction towards the inside of the chuck, the match between the external truncated cone-shaped surface of the collet and the internal truncated cone-shaped surface of the mouth of the chuck, determines a component of the applied force in a radial and centripetal direction and therefore radial and centripetal translation of the jaws, parallel to each other, towards the bar and simultaneously radial centripetal movement of the arms of the collet holder towards the bar.

The axial force or axial reaction can be applied to the collet uppermost from the edge of the axial hole on the head of the chuck that matches with the top of the jaws and, at the same time, with the top of the arms of the collet carrier, the shape and size of the top of the jaws and the top of the arms of the collet being substantially equal.

Advantageously the annular surface matching with the edge of the axial hole in the head of the chuck and with the tops of the jaws and arms of the collet carrier will taper slightly, with a forward geometrical vertex.

In one type of execution the internal cylindrical surface of the jaws is crossed by a series of sharp-edged channels that help to grip the bar.

Advantageously there are longitudinal radial clefts in the arms of the collet carrier, extending from the forward end nearly to the base of said carrier, the purpose of this being to increase elasticity of said arms.

In one type of execution the jaws have thin lateral fins of a constant thickness, of equal width substantially corresponding to half that of the arms of the collet carrier, their internal cylindrical surface being continuous with that of the body of said jaws.

When mounting the jaws onto the collet carrier the fins become superimposed over the arms of the collet carrier practically as far as the longitudinal clefts made in said arms thus creating continuity of the geometrically cylindrical surface that delimits said jaws on the inside.

In one type of execution the jaws present thin rear appendages of constant thickness substantially equal to the thickness of the arms on the collet carrier in its cylindrical area.

Said appendages are about as wide as the jaws themselves and are internally bounded by the same external and internal geometrical cylindrical surface as that of the body of the collet carrier in its cylindrical area.

On each of the opposing edges of said appendages and of the cylindrical part of the arms of the collet carrier there are teeth able freely to penetrate inside corresponding seats in the opposite edge, making it possible to apply the clamping force to the collet on actuating the pull of the collet carrier towards the back of the chuck.

The invention offers evident advantages.

Formation of the operative truncated cone-shaped body of the collet interacting with the truncated-cone shaped surface of the mouth of the chuck, by means of the set of six jaws - three substantially free and three formed by the arms of the collet carrier respectively alternating - ensures, by correct centripetal radial translation- of the free jaws, their substantially complete match with the bar and by action of the jaws created by the collet holder and fixed to it, the correct axial position of the bar in relation to the collet holder and therefore, at the same time, maximum clamping of the collet and maximum accuracy of the axial position of the collet in relation to the bar.

The possibility of applying the axial force needed for clamping the collet to secure the effects described above, both by thrust or an anterior reaction of the head of the chuck and by a posterior pull, confers a high degree of versatility on the collet subject of the invention and widens its range of use.

The structural and operational simplicity of this collet means that it can be produced at a competitive cost.

Characteristics and purposes of the invention will be made still clearer by the following examples of its execution illustrated by diagrammatically drawn figures.

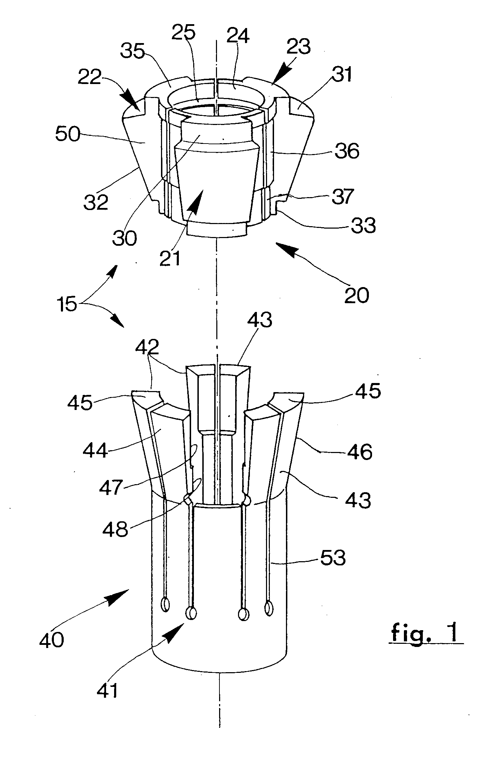

Fig.1 An exploded perspective of the collet with jaws and lateral fins.
Fig.2 A longitudinal section of the open collet.
Fig.3 The collet when closed.
Fig.4 An exploded perspective of the collet with free jaws.
Fig.5 The collet when open.
Fig.6 The collet when closed.
Fig.7 An exploded perspective of the collet with rear appendages.
Fig.8 The collet when open.
Fig.9 The collet when closed.

The chuck 10 exhibits a cylindrical body 11 with chamber 12 that terminates uppermost in an outward facing conical surface 13.

Hereinafter the terms "lower" and "upper" relate to the positions of the various devices in the attached drawings.

The automatic collet 15 comprises two main components: the collet itself with jaws 20 and the collet carrier 40.

These components are coaxial, their shapes are substantially conico-cylindrical and they are divided into substantially equal parts set at an equal radial distance as seen in the drawings.

The collet 20 is composed of three independent jaws 21-23.

These jaws have an internal cylindrical surface 24 in which are three channels 25 cut to ensure a firmer grip on the bar 14.

Externally and uppermost on the jaws is a cylindrical part 30 with a conical summit 31 that bends axially, in a truncated cone-shaped form 32, ending at the base in a small cylindrical part 33 internally beveled 34.

The upper edge 35 of the jaws 21-23 is shaped in the arc of a circle, said jaws having lateral cylindrical fins 26 that become smaller and form a cylindrical wall 37 of a lesser diameter.

The collet carrier 40 exhibits a cylindrical body 41 with three longitudinal rectangular spaces 42 open upwards forming the three arms 43.

The ends of the arms exhibit an upper edge 45 shaped in the arc of a circle, an external tapering wall 46 inclined upwards and outwards, and internal cylindrical walls 47 that form a smaller cylindrical wall 48 of lesser diameter which receive the fins 36 and 37 on the jaws 21-23 while the sides 50 of the jaws guide themselves into the spaces 42 in the jaw carrier 40.

As the drawings show, the components, collet 20 and collet carrier 40, are mounted coaxially.

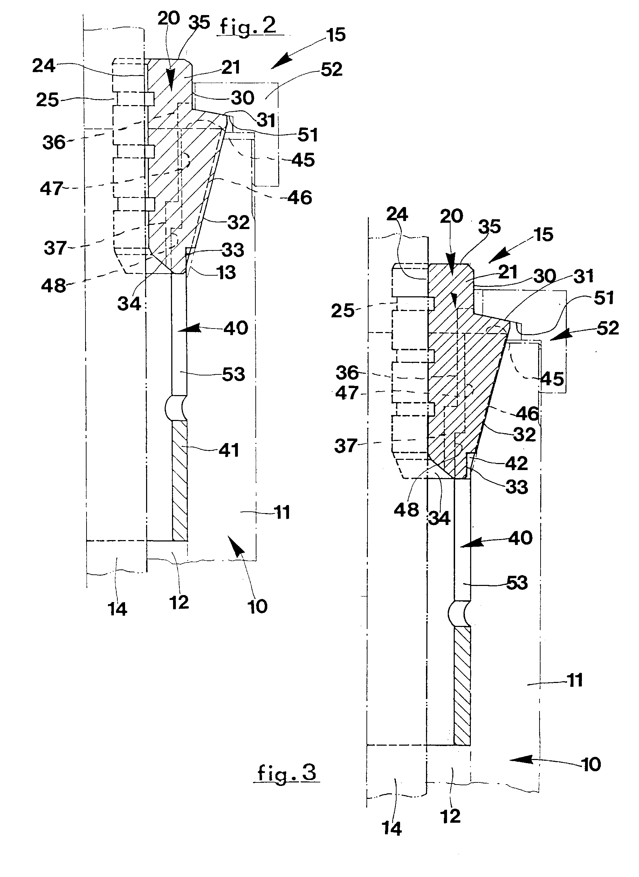

The mounting operation (Fig. 2) determines matching of the conical top 31 and of the truncated cone-shaped walls 32 of the jaws 21-23 respectively with the internal conical surface 51 of the head 52 and with the internal conical surface 13 of the chuck.

Operation is consequently as follows.

Due to the tapered matching surfaces 13 and 32, the reaction of the head 52 of the chuck determines a radial component of the jaws 21-23 guided into the spaces 42 between the arms 43 of the jaw carrier 40 given elasticity by the longitudinal cuts 53.

This leads to closure of the collet (Fig. 3) with a simultaneous centripetal movement, towards the bar 14 being processed, of the free jaws 21-23, translating substantially parallel to themselves, and of the ends of the arms 43 so producing an extended precise and powerful closing action on the bar.

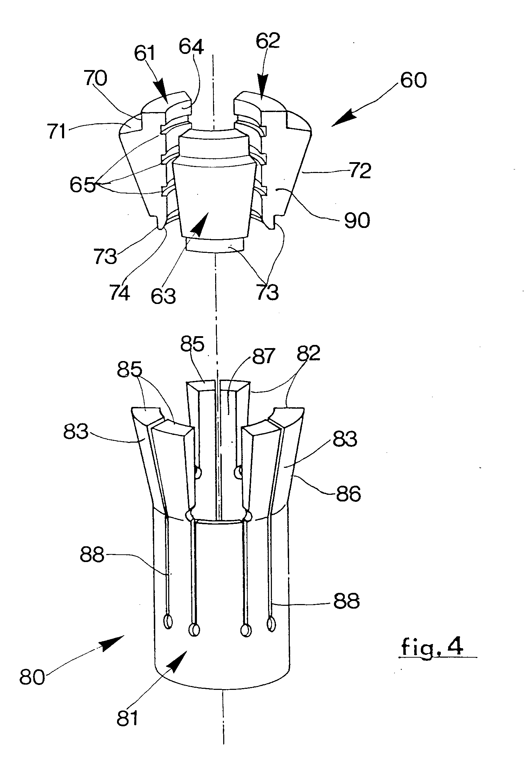

Figures 4-6 illustrate a variant 59 of the described collet.

Said automatic collet 59 comprises two main components: the collet itself with jaws 60 and the jaw carrier 80.

These components are coaxial, their shape is substantially conico-cylindrical and they are divided into substantially equal parts at an equal radial distance as may be clearly seen in the drawings.

The collet 60 is composed of three independent jaws 61-63.

In the internal cylindrical surface 64 of said jaws are three transversal channels 65 provided to ensure a better clamp on the bar 14.

Externally, in the upper part of the jaws, is a cylindrical projecting part 70 that becomes enlarged into a conical surface 71, then descending in a truncated cone-shaped wall 72 and terminating lower down in a smaller cylindrical part 73 with an internal bevel 74.

The jaw holder 80 exhibits a cylindrical body 81 with three rectangular longitudinal upward-facing spaces 82 that, uppermost, divide said cylindrical body into three arms 83. Said arms exhibit an upper edge 85 shaped in the arc of a circle, an external tapering wall 86, upwardly and outwardly inclined, and internal cylindrical walls 87 for passage of the bar.

The flat sides 90 of the jaws 61-63 fit themselves into the spaces 82 in the jaw holder 80.

As the figures show, the components - collet 60 and jaw holder 80 - are mounted radially.

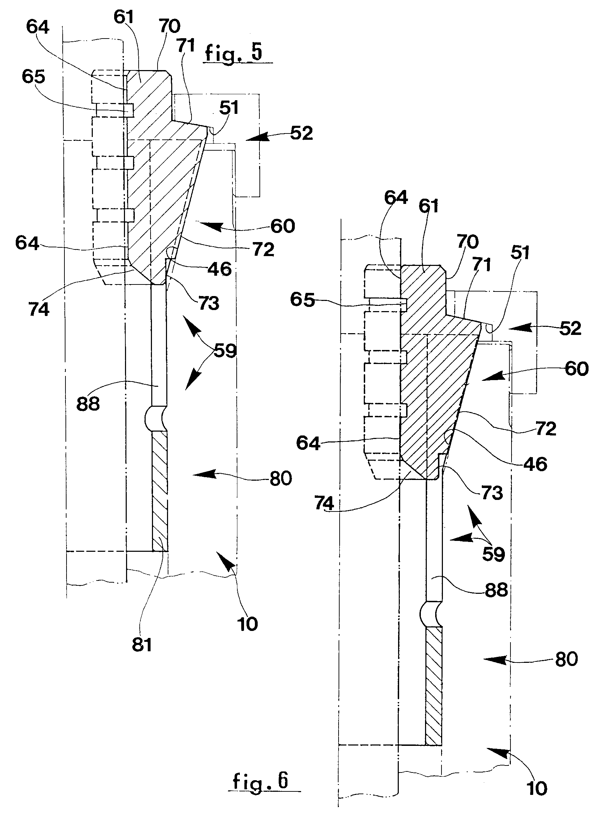

Mounting (Fig. 5) determines matching between the top of the truncated cone-shaped walls 71 of the jaws 61-63 and, respectively, the internal conical surface 51 of the head 52 and the internal conical surface 13 of the chuck 10.

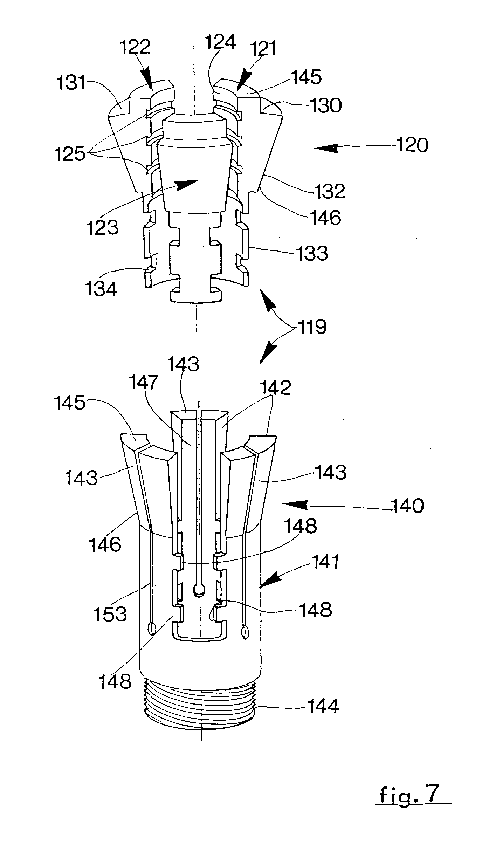

Figs. 7-9 illustrate a variante 119 of the collet already described.

The chuck 100 presents a body 101 with seat 102 where the plug 103 screws into the base 144 of the jaw holder 140.

Said automatic collet 119 comprises two main components: the collet with jaws 120 and the jaw holder 140.

These components are coaxial, substantially conico-cylindrical in shape and are divided into substantially equal parts set at an equal radial distance as can be clearly seen in the figures.

The collet 120 is composed of three independent jaws 121-123.

Said jaws have an internal cylindrical surface 124 crossed by three transversal channels 125 that ensure a better grip when the bar 14 is being clamped in place.

Externally, uppermost on the jaws is a cylindrical projecting part 130 that becomes enlarged by a substantially horizontal conical surface 131, continuing in a truncated cone-shaped body 132 of decreasing diameter and terminating at its lower end in a cylindrical appendage 133 in which are four notches 134 made to engage with the teeth 148 on the jaw holder.

The jaw holder 140 exhibits a cylindrical body 141 in which are three rectangular longitudinal upward-facing spaces 142 that divide said cylindrical body at the top into three arms 143 that terminate in truncated cone-shaped ends 143.

At the lower end is a thread 144 for screwing onto the plug 103 of the chuck 100.

The ends of the arms 143 exhibit an upper edge 145 shaped in an arc of a circle, an upwardly and outwardly inclined external conical wall 146 and internal cylindrical walls 147.

The jaws are inserted radially.

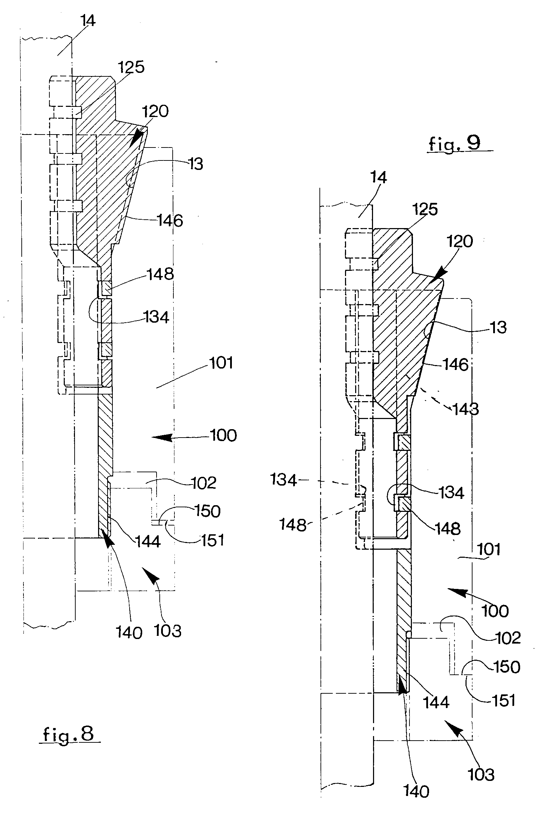

Mounting (Fig. 8) determines matching of the conical surface 146 of the jaws 121-123 and the conical surface of the arm ends 143 of the jaw holder 140 with the conical surface 13 of the chuck.

The collet operates as follows:

Positioning of the jaws round the bar 14 is obtained by screwing the plug 103 onto the thread 144 of the collet holder.

The collar 150 on the plug 103 rests on the bottom 151 of the body 101 of the chuck 100 drawing towards itself the jaw holder 140.

The teeth 148 being engaged in the notches 134 in the jaws 121-123, pull by the collet draws them along and, due to the tapering effect of the wall 146 on the surface 13 of the body 101 of the chuck, said pull causes closure of the collet 119 (Fig. 9) with simultaneous centripetal movement towards the bar, of the jaws 121 and 123 with translation parallel to themselves, and of the ends of the arms 143.

## Claims

1. Collet for the chucks of automatic lathes used for processing bars and the like, consisting of the collet itself and of a collet carrier,
characterized in that the collet comprises three equal radial jaws of a substantially constant width with substantially parallel sides, bounded by an internal cylindrical surface corresponding substantially to that of the bar to be processed and of an external truncated cone-shaped surface corresponding to the inner surface of the mouth of the chuck, and in that the carrier holder consists of a substantially cylindrical body, that can be inserted inside the chuck, whose front is bounded by an external truncated cone-shaped surface substantially equal to the external surface of the jaws, there being made in the body of said collet carrier, three substantially rectangular clefts set at an equal angular distance open at the front, of practically constant width substntially corresponding to that of the jaws, that create three substantially equal longitudinal arms, said jaws fitting circumferentially inside said clefts, the sum of the above forming a collet bounded internally by a constant geometrically cylindrical surface and externally, at the rear, by a cylindrical surface coaxial with the first and, at the front, by a truncated cone-shaped surface, the whole forming jaws and the arms of the collet carrier of substantially equal shapes and dimensions, substantially corresponding to the internal truncated cone-shaped surface of the mouth of the chuck so that, on applying to said collet an axial force or clamping reaction towards the inside of the chuck, matching of the exterrnal truncated cone-shaped surface with the internal truncated cone-shaped surface of the mouth of the chuck, determines a component of the applied force, in a radial and centripetal direction, and therefore radial and centripetal translation of the jaws parallel to themselves towards the bar and, at the same time, radial centripetal movement of the arms of the collet carrier towards the bar causing the collet to clamp onto the bar, said clamping action being ensured radially by the jaws and radial-axially by the arms of the collet carrier thus producing maximum adherence of the collet to the bar and maximum precision of the position of the bar in relation to the collet carrier.

2. Collet as in claim 1,
characterized in that the axial force or reaction is applied uppermost to the collet by the edge of the axial hole in the chuck head that matches with the top of the jaws and simultaneously with the top of the arms of the collet carrier, the top of the jaws and that of the arms of the collet carrier being of substntially equal shape and dimensions

3. Collet as in claim 2,
characterized in that the annular matching surface of the edge of the axial hole in the chuck head with the tops of the jaws and of the arms of the collet carrier is slightly tapered with anterior geometrical vertex.

4. Collet as in clalim 1,
characterized in that across the internal cylindrical surface of the jaws is a set of transversal sharp-edged channels that facilitate the grip on the bar.

5. Collet as in claim 1,
characterized in that in the arms of the collet carrier are longitudinal radial clefts extending from the front ends practically down to the base of said collet carrier, the purpose this being to increase elasticity of said arms.

6. Collet as in claims 1 and 5,
characterized in that the jaws exhibit thin lateral fins of a constant thickness, of equal width substantially half that of the arms of the collet carrier, their internal cylindrical surface being continuous with that of the body of said jaws so that, on mounting the jaws on the collet carrier, said fins cover the arms of the collet carrier substantially to the edges of the longitudinal clefts made in said arms forming a continuous geometrical cylindrical surface that internally delimits said jaws.

7. Collet as in claim 1,
characterized in that the jaws exhibit fairly thin rear appendages of constant thickness almost equal to that of the arms of the collet carrier at its cylindrical area, width of said appendages being substantially that of said jaws, internally and externally bounded by the same geometrical cylindrical surface as that of the body of the collet carrier at its cylindrical area, each of the opposing edges of said appendages and the cylindrical part of the arms of the collet holder being provided with teeth that freely penetrate inside corresponding notches in the opposite edge so that clamping force can be applied to the collet on actuating the pull of the collet carrier towards the rear side of the chuck.
